# EUROPÄISCHE PATENTSCHRIFT

(11) **EP 1 805 414 B1**
(45) Veröffentlichungstag und Bekanntmachung des Hinweises auf die Patenterteilung: **09.12.2015**
(21) Anmeldenummer: 04786200.8
(22) Anmeldetag: 31.08.2004
(51) Int. Cl.: F03D 1/00

(54) **GRÜNDUNG FÜR EINE OFFSHORE-WINDKRAFTANLAGE**
FOUNDATION FOR AN OFFSHORE-WIND FARM
FONDATION POUR UNE EOLIENNE EN MER

(43) Veröffentlichungstag der Anmeldung: 11.07.2007
(73) Patentinhaber: BARD Holding GmbH, 26725 Emden (DE)
(72) Erfinder: BEKKER, Arngolt, 28355 Bremen (DE); BARAEV, Anton, Moskau 115682 (RU)
(74) Vertreter: Manasse, Uwe
(86) Internationale Anmeldenummer: PCT/DE2004/001924
(87) Internationale Veröffentlichungsnummer: WO 2006/024244

(56) Entgegenhaltungen:
- EP-A- 1 074 663
- DE-A1- 10 061 916
- DE-A1- 10 319 764
- DE-A1- 19 648 299
- DE-U1- 20 109 981
- US-A- 5 567 086
- PERNPEINTNER R: "OFFSHORE SITING OF LARGE WIND ENERGY CONVERTER SYSTEMS IN THE GERMAN NORTH SEA AND BALTIC REGIONS" MODERN POWER SYSTEMS, WILMINGTON PUBLISHING, WILMINGTON, GB, Bd. 4, Nr. 6, Juni 1984 (1984-06), Seiten 33-40, XP001014353 ISSN: 0260-7840
- MORGAN C A ET AL: "FEASIBILITY STUDY FOR A UK DEMONSTRATION OFFSHORE WIND TURBINE" WIND ENGINEERING, MULTI-SCIENCE PUBLISHING CO., BRENTWOOD, ESSEX, GB, Bd. 17, Nr. 3, Januar 1993 (1993-01), Seiten 113-119, XP000417857 ISSN: 0309-524X
- KERR D: "SUPPORT STRUCTURES FOR AN OFFSHORE ARRAY OF VERTICAL AXIS WIND TURBINES -A DESIGN STUDY" WIND ENGINEERING, BRENTWOOD, GB, Bd. 10, Nr. 1, 1986, Seiten 47-61, XP001014352 ISSN: 0309-524X

## Beschreibung

Die vorliegende Erfindung betrifft eine Gründung gemäß dem Oberbegriff von Anspruch 1.

Eine Gründung der eingangs genannten Art ist aus der DE 201 09 981 U1 bekannt. Bei der bekannten Gründung ist die Stützstruktur als räumliches Fachwerk ausgebildet, das oberhalb des zu erwartenden Wellengangs angeordnet ist. Das Fachwerk ist an seinen n Ecken jeweils mit einem Eckrohr versehen, die mit den Gründungsrohren fluchten, und die Stoßstelle zwischen den Eckrohren und den Gründungsrohren ist oberhalb des Meeresspiegels angeordnet.

Aus der DE 100 61 916 A1 ist eine Gründung für eine Offshore-Windkraftanlage mit n an den Ecken eines gedachten regelmäßigen Vielecks in den Meeresboden eingerammten Gründungsrohren und mit einer den Turm der Windkraftanlage tragenden n-eckigen Stützstruktur bekannt, bei der zwischen der Stützstruktur und den freien Enden der Gründungsrohre angeordnete, ein Verschwenken des Stützgerüstes in alle Richtungen um die aufrecht stehenden Gründungsrohre erlaubende Gelenke vorgesehen sind.

Darüber hinaus wird in Hau, Windkraftanlagen, Springer Verlag, dritte Auflage, Seite 624, Bild 17.20, eine Tripod-Gründung gezeigt. Die bekannte Gründung weist ein zentrales Rohr mit drei rohrförmigen Schrägstützen auf. Horizontal verlaufende Rohre verbinden die unteren Enden der Schrägstützen miteinander und mit dem zentralen Rohr. In der Regel werden die drei Auflagepunkte mit dünneren Stahlrohren im Meeresboden verankert. Schrägstreben und Gurte aus Querstreben sowie Verbindungen zwischen der Stützstruktur und den Gründungsrohren liegen unterhalb des Meeresspiegels.

Die Gründung mit der darauf befestigten Windkraftanlage kann als ein mechanisches System angesehen werden, das als ein Ausleger mit einem Punktgewicht (Rotor und Gondel) an der Spitze des Auslegers im Meeresboden verankert ist. Mit zunehmendem Abstand zwischen dem Punktgewicht an der Spitze des Auslegers und der Verankerung verringert sich die Eigenfrequenz eines solchen Systems deutlich. Zur Vermeidung von Resonanz mit den Rotorfrequenzen muß die Eigenfrequenz des Systems in einen für die jeweilige Windkraftanlage geeigneten Frequenzbereich angehoben werden. Dabei ist zu beachten, daß verglichen mit den bereits existierenden Prototypen der Abstand zwischen dem Punktgewicht (Rotor und Gondel) und der Verankerung im Meeresboden im Falle von Windkraftanlagen, die bei Wassertiefen von ca. 50m eingesetzt werden, deutlich größer ist als im Falle von bereits existierenden Windkraftanlagen, die bei geringeren Wassertiefen eingesetzt werden, wobei immer schwieriger wird, die erforderlichen Eigenfrequenzen zu erreichen. Eine zusätzliche Schwierigkeit besteht darin, daß immer leistungsstärkere Windkraftanlagen zum Einsatz kommen, bei denen das Rotor- und Gondelgewicht wesentlich größer ist, als im Falle der bereits existierenden Prototypen.

Der Erfindung liegt somit die Aufgabe zugrunde, eine technisch einfachere bei Wassertiefen im Bereich von ca. 30m bis ca. 50m einsetzbare Gründung zu schaffen.

Erfindungsgemäß wird diese Aufgabe bei der gattungsgemäßen Gründung dadurch gelöst, daß das Stützgerüst aus Radialstreben mit nicht geschlitztem Profil besteht und zumindest die Unterseite der Stützstruktur unterhalb des zu erwartenden Wellengangs, jedoch über dem Meeresspiegel angeordnet ist sowie steife Verbindungen zwischen dem Stützgerüst und den freien Enden der Gründungsrohre vorgesehen sind. Erfindungsgemäß weisen die Radialstreben einen nach außen such verändern den Querschnitt auf.

Mit einer steifen Verbindung soll eine Verbindung gemeint sein, die so steif, wie dies konstruktiv möglich ist, ausgebildet ist und Verschiebungen der verbundenen Elemente gegeneinander weitestgehend ausschließt.

Ein nicht geschlitztes Profil kann auch als geschlossenes Profil, wie zum Beispiel ein rechteckiges oder zylindrisches Profil, bezeichnet werden.

Die Anordnung zumindest der Unterseite der Stützstruktur unterhalb der zu erwartenden Wellenhöhe (des zu erwartenden Wellengangs) und die Ausführung des Stützgerüstes als radiale Konstruktion mit minimaler Höhe erlaubt es, die Windkraftanlage mit Rotor und Gondel abzusenken, wodurch das Erreichen der erforderlichen Eigenfrequenzen vereinfacht wird, bei welchen Resonanzen mit den Rotorfrequenzen ausgeschlossen sind.

Durch die Steifigkeit der Verbindung zwischen Stützgerüst und den freien Enden der in den Meeresboden gerammten Gründungsrohre erhöht sich die Steifigkeit des aus Gründung und Windkraftanlage bestehenden Systems; das Erreichen der erforderlichen Eigenfrequenzen wird ebenfalls erleichtert.

Gemäß einer ersten besonderen Ausführungsform der Erfindung kann vorgesehen sein, daß n=3 ist.

Alternativ kann vorgesehen sein, daß n=4 ist.

GemäB der Erfindung ist vorgesehen, daß die Verbindungen zwischen den freien Enden der Gründungsrohre und dem Stützgerüst Stutzen umfassen, die fest und steif mit dem Stützgerüst verbunden sind und die in die freien Enden der Gründungsrohre mit einem Hohlraum zwischen den Wänden der Gründungsrohre und den Stutzen gesteckt sind, wobei der Hohlraum vergossen ist. Der Hohlraum besteht aus dem Ringspalt in radialer Richtung zwischen den jeweiligen inneren und äußeren Elementen (Stutzen/Gründungsrohr) und dem Raum in Längsrichtung zwischen den Enden der Elemente

Alternativ ist erfindungsgemäß vorgesehen, daß die Verbindungen zwischen den freien Enden der Gründungsrohre und dem Stützgerüst Stutzen umfassen, die fest und steif mit dem Stützgerüst verbunden sind und die auf die freien Enden der Gründungsrohre von außen mit einem Hohlraum zwischen den Wänden der Stutzen und den Gründungsrohren gesteckt sind, wobei der Hohlraum vergossen ist.

Günstigerweise ist in der Stützstruktur ein aufrecht angeordnetes Turmaufnahmeelement mit zylindrisch-konischer Gestalt und einer Verbindung für den Turm zentral angeordnet ist, welches durch die Radialstreben mit den Stutzen fest verbunden.

Gemäß einer weiteren besonderen Ausführungsform der Erfindung ist die Stützstruktur ganz oder teilweise oberhalb der Splash-Zone angeordnet.

Der Erfindung liegt die überraschende Erkenntnis zugrunde, daß durch die spezielle Gestaltung und Anordnung der Stützstruktur in Kombination mit den steifen Verbindungen zwischen den freien Enden der Gründungsrohre mit der Stützstruktur die Eigenfrequenzen des Systems aus Gründung und Windkraftanlage deutlich einfacher in einen Bereich angehoben werden können, in dem Resonanzen mit den Rotorfrequenzen ausgeschlossen sind, was für Windkraftanlagen, die bei Wassertiefen von ca. 30m bis 50m verwendet werden, besonders aktuell ist.

Das Absenken des Stützgerüstes und seine minimale Höhe, die dadurch erreicht wird, dass das Stützgerüst aus Radialstreben mit nicht geschlitztem Profil und nicht als Rahmen wie aus der DE 201 09 981 U1 bekannt; mit steifen Verbindungen zwischen Stützgerüst und Gründungsrohren gegenüber dem aus DE 10061916 A1 bekannten Fachwerk mit Gelenkverbindungen; die Anordnung der Verbindungen zwischen den Gründungsrohren und dem Stützgerüst über dem Meeresspiegel und nicht unter Wasser, wie beim Prototypen aus dem Buch von E. Hau - all das führt dazu, dass die erforderlichen Eigenfrequenzen einfacher erreicht werden können.

Die Anordnung zumindest der Unterseite der Stützstruktur unterhalb der zu erwartenden Wellenhöhe (des zu erwartenden Wellengangs) und gemäß einer besonderen Ausführungsform ganz oder teilweise oberhalb der Splash-Zone, die durch erhöhte Korrosion der Konstruktion gekennzeichnet ist, stellt einen Kompromiß zwischen dem Wunsch, die Konstruktion vor Welleneinwirkung zu schützen und somit die einwirkenden Kräfte der Wellen zu verringern, einerseits und der Notwendigkeit, bestimmte Eigenfrequenzen in der Konstruktion zu gewährleisten, andererseits dar.

Weitere Merkmale und Vorteile der Erfindung ergeben sich aus den Ansprüchen und aus der nachstehenden Beschreibung, in der ein Ausführungsbeispiel anhand der schematischen Zeichnungen im einzelnen erläutert ist. Dabei zeigt:
- Figur 1: eine Seitenansicht einer Gründung gemäß einer besonderen Ausführungsform der vorliegenden Erfindung;
- Figur 2: eine Schnittansicht entlang der Linie I-I von Figur 1;
- Figur 3: eine Schnittansicht entlang der Linie HI-III in Figur 2; und
- Figur 4: eine Schnittansicht entlang der Linie IV-IV in Figur 2.

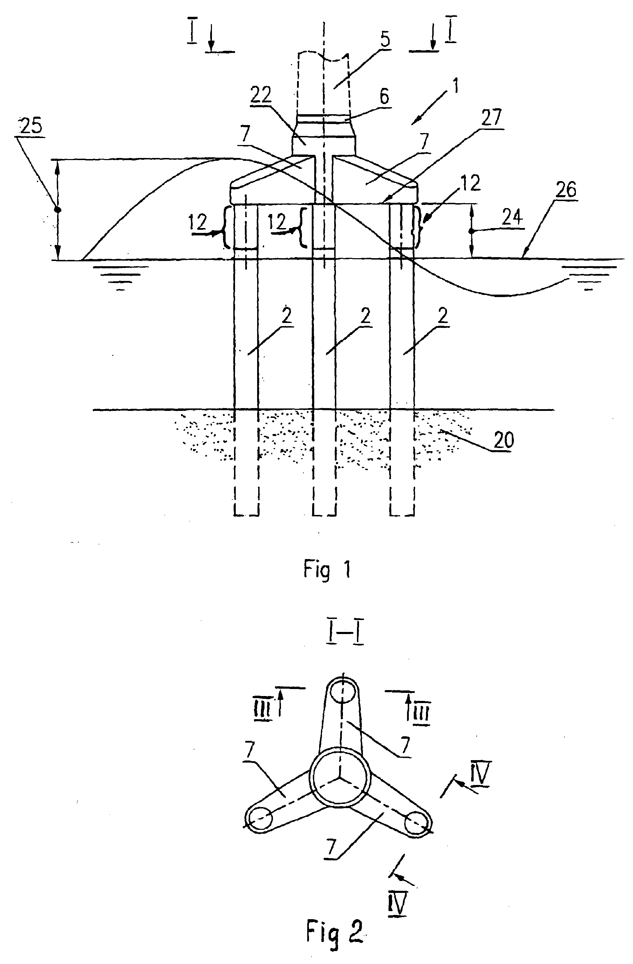

Die in Figur 1 dargestellte Gründung für eine Offshore-Windkraftanlage umfaßt n=3 an den Ecken eines gedachten Vielecks in den Meeresboden 20 eingerammte Gründungsrohre 2 und eine einen Turm 5 der Offshore-Windkraftanlage tragende Stützstruktur 1, die über jeweils an ihren n=3 Ecken angeordnete steife Verbindungen 12 mit den freien Enden der Gründungsrohre 2 verbunden ist.

Die in der Figur 1 gezeigte Stützstruktur 1 umfaßt n=3 Radialstreben 7 mit sich radial nach außen verjüngendem rechteckigem Querschnitt, so daß sich jeweils ein verjüngendes Kastenrohr ergibt. Zentral in der Stützstruktur 1 ist ein Turnaufnahmeelement 22 mit zylindrisch-konischer Gestalt sowie einer Verbindung 6 angeordnet. Das Turmaufnahmeelement 22 ist mit den Radialstreben 7 fest verbunden.

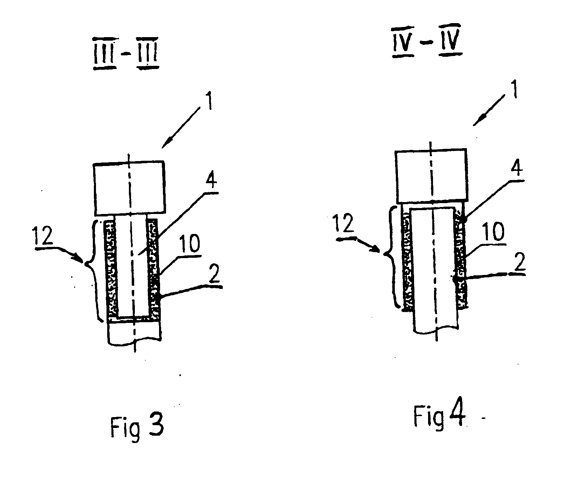

Die freien Enden der Gründungsrohre 2 sind mit dem Stützgerüst steif verbunden. In den Figuren 3 und 4 sind Beispiele für derartige steife Verbindungen, und zwar nach dem Rohrim-Rohr-Prinzip, dargestellt. In Figur 3 umfassen die steifen Verbindungen 12 Stutzen 4, die in die freien Enden der Gründungsrohre 2 mit Spiel, das heißt mit einem Hohlraum gesteckt sind. Damit die Verbindungen zwischen den Gründungsrohren 2 und den Stutzen 4 fest, steif und belastbar sind, wird der Hohlraum zum Beispiel mit Beton 10 vergossen.

In Figur 4 umfassend die Verbindungen 12 Stutzen 4, die auf die freien Enden der Gründungsrohre 2 mit Spiel, das heißt mit einem Hohlraum gesteckt sind. Der Hohlraum wird wiederum zum Beispiel mit Beton 10 vergossen.

Selbstverständlich können die Verbindungen 12 an allen Ecken identisch sein, das heißt anders als in Figur 2 gezeigt.

Eine steife Verbindung zwischen der Stützstruktur 1 und den Gründungsrohren 2 erhöht die Festigkeit der Gründung mit einer darauf befestigten Windkraftanlage, von der nur der Turm 5 - und auch nur teilweise - gezeigt ist, womit das Erreichen einer oberhalb eines erforderlichen Minimalwertes liegenden ersten Eigenfrequenz der Gründung vereinfacht wird.

Das Anordnen der Stützstruktur 1 mit deren Unterseite 27 unterhalb des zu erwartenden Wellengangs 25, der der zu erwartenden maximalen Wellenhöhe entspricht, jedoch oberhalb des Meeresspiegels 26 erlaubt es, die Höhe, in der der Turm 5 mit der Stützstruktur 1 verbunden wird, zu verringern und auch die Windkraftanlage niedriger anzubringen. Dadurch wird das Erreichen der erforderlichen (höheren) Eigenfrequenz zusätzlich vereinfacht. Günstigerweise wird die Stützstruktur 1 - wie in den Figuren 1 und 3 gezeigt - oberhalb der Splash-Zone (Spritzwasserzone) 24 angebracht, da die Splash-Zone 24 durch erhöhte Korrosion der Konstruktion gekennzeichnet ist.

Die Ausführung des Stützgerüstes 1 mit Radialstreben 7 erlaubt es, die Höhe der Stützstruktur und somit der Verbindung zwischen der Stützstruktur 1 und dem Turm 5 zu verringern sowie die Windkraftanlage abzusenken.

Die in der vorliegenden Beschreibung, in den Zeichnungen sowie in den Ansprüchen offenbarten Merkmale der Erfindung können sowohl einzeln als auch in beliebigen Kombinationen für die Verwirklichung der Erfindung in ihren verschiedenen Ausführungsformen wesentlich sein.

## Patentansprüche

1. Gründung für eine Offshore-Windkraftanlage mit n an den Ecken eines gedachten regelmäßigen Vielecks in den Meeresboden (20) eingerammten Gründungsrohren (2) und mit einem den Turm (5) der Windkraftanlage tragenden n-eckigen Stützgerüst (1), das mit den freien Enden der Gründungsrohre (2) verbunden ist, wobei steife Verbindungen (12) zwischen dem Stützgerüst (1) und den freien Enden der Gründungsrohre (2) vorgesehen sind, und wobei das Stützgerüst (1) aus Radialstreben (7) mit nicht geschlitztem Profil besteht,
**dadurch gekennzeichnet, dass**
zumindest die Unterseite (27) des Stützgerüstes (1) unterhalb des zu erwartenden Wellengangs (25), jedoch über dem Meeresspiegel (26) angeordnet ist, die Radialstreben (7) einen sich radial nach außen ändernden Querschnitt aufweisen und dass die Verbindungen (12) zwischen den freien Enden der Gründungsrohre (2) und dem Stützgerüst (1) Stutzen (4) umfassen, die fest und steif mit dem Stützgerüst (1) verbunden sind und die in die freien Enden der Gründungsrohre (2) mit einem Hohlraum zwischen den Wänden der Gründungsrohre (2) und den Stutzen (4) gesteckt sind oder die auf die freien Enden der Gründungsrohre (2) von außen mit einem Hohlraum zwischen den Wänden der Stutzen (4) und den Gründungsrohren (2) gesteckt sind, wobei der Hohlraum vergossen ist.

2. Gründung nach Anspruch 1, **dadurch gekennzeichnet, dass** n=3 ist.

3. Gründung nach Anspruch 1, **dadurch gekennzeichnet, dass** n=4 ist.

4. Gründung nach einem der vorangehenden Ansprüche, **dadurch gekennzeichnet, dass** in dem Stützgerüst (1) ein aufrecht angeordnetes Turmaufnahmeelement (22) mit zylindrisch-konischer Gestalt und einer Verbindung (6) für den Turm (5) zentral angeordnet ist, welches durch die Radialstreben (7) mit den Stutzen (4) fest verbunden ist.

5. Gründung nach einem der vorangehenden Ansprüche, **dadurch gekennzeichnet, dass** das Stützgerüst (1) ganz oder teilweise oberhalb der Splash-Zone (24) angeordnet ist.

## Claims

1. Foundation for an offshore wind turbine, having n foundation pipes (2) which are rammed into the seabed (20) at the corners of an imaginary regular polygon, and having a polygonal support frame (1) which has n-corners and supports the tower (5) of the wind turbine and which is connected to the free ends of the foundation pipes (2), wherein rigid connections (12) are provided between the support frame (1) and the free ends of the foundation pipes (2), and wherein the support frame (1) is composed of radial stays (7) having a non-slotted profile,
**characterized in that**
at least the lower side (27) of the support frame (1) is disposed below the expected swell (25) but above sea level (26), the radial stays (7) have a cross section which radially towards the outside is variable, and **in that** the connections (12) between the free ends of the foundation pipes (2) and the support frame (1) comprise connectors (4) which are fixedly and rigidly connected to the support frame (1) and which are plugged into the free ends of the foundation pipes (2), leaving a hollow space between the walls of the foundation pipes (2) and the connectors (4), or which are plugged from the outside into the free ends of the foundation pipes (2), leaving a hollow space between the walls of the connectors (4) and the foundation pipes (2), wherein the hollow space is grouted.

2. Foundation according to Claim 1, **characterized in that** n=3.

3. Foundation according to Claim 1, **characterized in that** n=4.

4. Foundation according to one of the preceding claims, **characterized in that** a tower-receiving element (22), which is disposed in an upright manner and has a cylindrical-conical shape and a connection (6) for the tower (5), and which is fixedly connected to the connectors (4) by way of the radial stays (7), is centrally disposed in the support frame (1).

5. Foundation according to one of the preceding claims, **characterized in that** the support frame (1) is entirely or partially disposed above the splash zone (24).

## Revendications

1. Fondation pour une éolienne offshore comprenant n tubes de fondation (2) enfoncés au fond de la mer (20) aux coins d'un polygone régulier imaginaire et comprenant une structure de support (1) à n coins portant la tour (5) de l'éolienne, laquelle est connectée aux extrémités libres des tubes de fondation (2), des connexions rigides (12) entre la structure de support (1) et les extrémités libres des tubes de fondation (2) étant prévues, et la structure de support (1) se composant d'entretoises radiales (7) avec un profil non fendu,
**caractérisée en ce**
**qu'**au moins le côté inférieur (27) de la structure de support (1) est disposé en dessous du niveau de la houle attendu (25), mais toutefois au-dessus du niveau de la mer (26), les entretoises radiales (7) présentent une section transversale variant radialement vers l'extérieur, et en ce que les connexions (12) entre les extrémités libres des tubes de fondation (2) et la structure de support (1) comprennent des montants (4) qui sont connectés fixement et rigidement à la structure de support (1) et qui sont enfichés dans les extrémités libres des tubes de fondation (2) avec une cavité entre les parois des tubes de fondation (2) et les montants (4) ou qui sont enfiché sur les extrémités libres des tubes de fondation (2) depuis l'extérieur avec un espace creux entre les parois des montants (4) et les tubes de fondation (2), la cavité étant scellée.

2. Fondation selon la revendication 1, **caractérisée en ce que** n = 3.

3. Fondation selon la revendication 1, **caractérisée en ce que** n = 4.

4. Fondation selon l'une quelconque des revendications précédentes, **caractérisée en ce qu'**un élément de réception de tour (22) disposé verticalement avec une forme cylindrique-conique et une connexion (6) pour la tour (5) est disposé centralement dans la structure de support (1), lequel est connecté fixement par les entretoises radiales (7) aux montants (4).

5. Fondation selon l'une quelconque des revendications précédentes, **caractérisée en ce que** la structure de support (1) est disposée complètement ou partiellement au-dessus de la zone d'embruns (24).
